# EUROPEAN PATENT APPLICATION

(11) **EP 3 076 706 A1**
(43) Date of publication of application: **05.10.2016**
(21) Application number: 14798152.6
(22) Date of filing: 22.05.2014
(51) Int. Cl.: H04W 28/08, H04W 64/00

(54) **PATH ESTABLISHMENT METHOD, CONTROLLER AND MOBILITY MANAGEMENT ENTITY**

(30) Priority: 29.11.2013 CN 201310633945
(71) Applicant: ZTE Corporation, Shenzhen, Guangdong 518057 (CN)
(72) Inventor: WANG, Jing, Shenzhen Guangdong 518057 (CN)
(74) Representative: Studio Torta S.p.A.
(86) International application number: PCT/CN2014/078195
(87) International publication number: WO 2014/183696

(57) **Abstract**

The present invention discloses a path establishment method, a controller and an MME, said method comprising: the controller receives user location information sent by a mobility management entity (MME); the controller determines a new anchor gateway and issues a flow table to the new anchor gateway and to an original anchor gateway, said flow table being used for establishing a new routing channel and for establishing a forwarding channel between the new anchor gateway and the original anchor gateway; the controller, by means of a control message, notifies the MME to trigger an access point (APN) packet data network (PDN) connection establishment process, and directs the MME to directly respond to a PDN connection establishment request of an APN initiated by a UE.

## Description

### TECHNICAL FIELD

The present disclosure relates to the fields of software-defined networking technologies and mobile core network distribution related technologies, and relates to a path establishment method, a controller and a Mobility Management Entity (MME).

### BACKGROUND

An OpenFlow protocol adopts a forwarding/control separation architecture, and an external control plane entity employs the OpenFlow protocol to control a forwarding plane equipment to achieve a variety of forwarding logics, while the main function of the forwarding plane equipment is to perform a controlled forwarding according to a flow table issued by an OpenFlow controller, wherein its behavior is standardized: receiving a message, reading related field values of headers L2/L3/L4 of the message as keywords for looking up the flow table, after one table entry is matched, processing the fields of the message according to an instruction set in contents of the table entry, and after the fields are completely processed, forwarding the processed fields to a certain logical or physical port according to instructions.

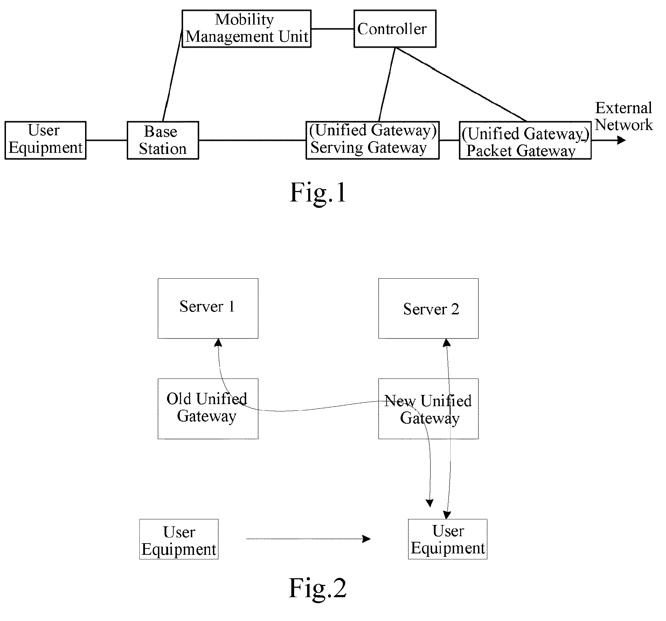

EPC (Evolved Packet Core) is a new packet core introduced at 3GPP R8 stage, which further flattens the network. The forwarding plane equipment is divided into a SGW (Serving Gateway) and a PGW (PDN Gateway, packet data gateway). The introduction of an OpenFlow mechanism in the network architecture has a certain influence on the user plane network element function and control mode of the existing EPC, which is as shown in Fig. 1.

A UGW (Unified Gateway) in Fig. 1 possesses a user plane function only, and all the control plane management functions, such as the establishment, modification and QoS guarantee of the user plane tunnels, are completed by a controller *Controller.* Through the logical control of the *Controller,* the UGW may be divided into an SGW and a P-GW by function implementations, wherein the SGW and the PGW are substantially unified gateways UGW having the same functions. In this way, more flexible networking may be implemented for the EPC core; moreover, the *Controller* may flexibly introduce an application function through an API (Application Program Interface) so as to enhance the ability of the core.

In order to support the path optimization and service continuity for data transmission, the EPC network employs a manner as described in Fig. 2: a user establishes an optimized path for accessing *Server* 1 on the old unified gateway (old UGW, P-GW), and the old UGW (P-GW) is an anchor gateway close to the user side. When the user moves, and a mobile network finds there is a more suitable anchor gateway that may provide services for the user, then a PDN (Packet Data Network) connection of the same APN (Access Point Name) is established on the new unified gateway (new UGW, P-GW) to provide a data link for the user to subsequently initiate a new service of the same APN, and a forwarding channel between the old UGW and the new UGW is established for supporting the data service with unaltered IP addresses and ensuring the continuity. The user may continuously use the IP 1 distributed for the old UGW (P-GW) in the new UGW serving range to continue the old service, and may use the IP2 distributed for the new UGW (P-GW) to access the new service in the same network.

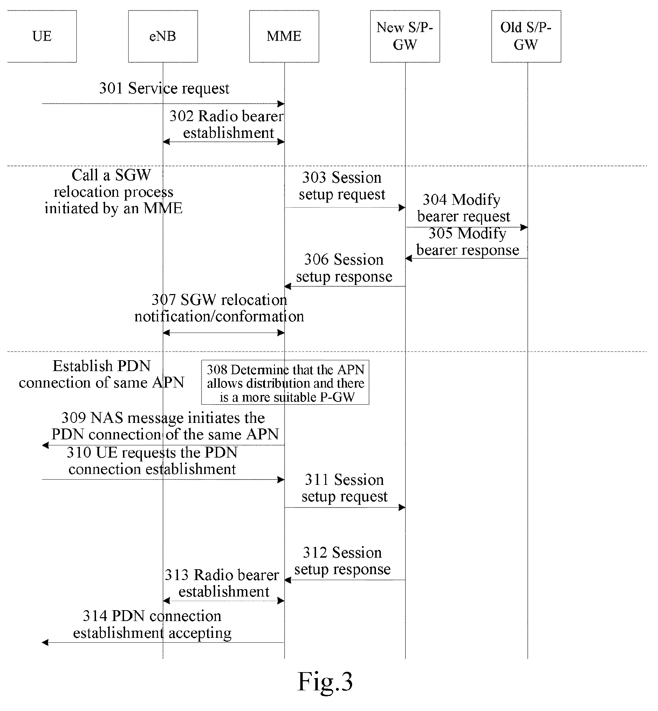

Under the EPC network framework, in order to implement the process of Fig. 2, steps as shown in Fig. 3 need to be performed. It is explained by taking the establishment of a data forwarding channel and the establishment of new PDN connection of the same APN during a service request process initiated by the user as an example in Fig. 3.

A new S/P-GW and an old S/P-GW in Fig. 3 are different logical function units located on the UGW Each UGW may either serve as an S-GW or a P-GW, which is depended on roles appointed by the controller.

In step S301, when a user wants to send uplink data or signaling, a UE is triggered to initiate a service request process, and then the UE sends a service request message to an MME. When forwarding the service request message, an eNB sends an eNB ID identifying the user location and/or TAI information configured by the eNB to the MME.

In step S302, the MME establishes a corresponding radio bearer according to the session information saved in the context. The MME sends an address and a TEID of the old SGW in a radio bearer establishment request message to the eNB. The eNB sends the user plane address and TEID of the eNB to the MME in a radio bearer establishment response message.

Steps S303 to S307 are processes of calling an SGW relocation initiated by the MME, for establishing a data forwarding channel.

In step S303, the MME determines whether to select a new serving gateway S-GW according to the information identifying the user location as described in step S301. If yes, then a session setup request message is sent to the new SGW, and the message carries the address and TEID of the eNB for establishing a downlink data plane channel of the user. The message carries the control plane address, user plane address and TEID information of an anchor gateway at the same time.

In step S304, the newly selected SGW sends a modify bearer request message to the old P-GW of the anchor, the message carrying a user plane address and TEID information assigned for the new SGW.

In step S305, the P-GW returns a modify bearer response message.

In step S306, the new SGW returns a session setup response message, the message carrying a new uplink user plane address and TEID assigned for the new SGW

In step S307, the MME notifies the user plane address and TEID information of the new SGW to the eNB through an SGW relocation notification message, and the eNB returns an SGW relocation confirmation message.

In step S308, if the APN subscription of the user allows distribution, then the MME may also determine whether the anchor gateway is suitable according to the user location information acquired in step S301. If there is a more suitable anchor gateway for providing an APN access, then steps S308 to S316 are enabled to establish the PDN connection process of same APN so as to distribute a new IP address to the user, so that the user may use the new IP address to continuously access services in a network corresponding to the APN.

In step S309, the MME triggers the UE to initiate the establishment of new PDN connection of the APN that may be used for distribution through an NAS (Non Access Stratum), i.e., the establishment of the PDN connection of same APN.

In step S310, the UE initiates a PDN connection establishment request message of a designated APN.

In step S311, the MME initiates the process of establishing new PDN connection of the designated APN, and establish tunnels on the new S-GW and new P-GW. The MME sends a session setup request message to the new SGW, the message carrying a control plane address, a user plane address and a TEID of the new P-GW. The new S-GW sends a session setup request message to the new P-GW, the message carrying the user plane address and TEID information of the new S-GW for downlink data transmission. The new P-GW returns a session setup response message, the message carrying the user plane address and TEID distributed by the new P-GW for uplink data transmission. In this flow, the operations between the new S-GW and the new P-GW can be deemed as internal operations.

In step S312, the new P-GW returns a session setup response message, the message carrying the user plane address and TEID distributed by the new P-GW for uplink data transmission. The new S-GW returns a session setup response to the MME, the message carrying the S-GW user plane address and TEID information distributed by the new S-GW for uplink data transmission. In this flow, the operations between the new S-GW and the new P-GW can be deemed as internal operations.

In step S313, the MME establishes a radio bearer corresponding to the new PDN connection through a radio bearer establishment process. The MME carries an uplink user plane address and TEID distributed by the new S-GW in the radio bearer establishment request message.

In step S314, the MME returns a PDN connection establishment accepting message to the UE, the message carrying an IP address or IP prefix information newly distributed to the user.

In the foregoing flow, the establishment of the forwarding tunnel and the establishment of the new PDN connection are completed in two parts according to the existing EPS network system. In a SDN-based EPC network, a plurality of flow tables can be delivered in one process since the operation of a controller on a unified gateway UGW would not depend on a traditional GTP (GPRS Tunnel Protocol) protocol operation process; therefore, and there is space to further optimize the flow. No effective solutions are provided for the foregoing problems at present.

### SUMMARY

The embodiments of the present disclosure provides a path establishment method, a controller and an MME for at least solving the above problems.

According to one aspect of the embodiments of the present disclosure, there is provided a path establishment method, including:

receiving, by a controller, user location information sent by a mobility management entity MME;

determining a new anchor gateway, and issuing a flow table to the new anchor gateway and an old anchor gateway by the controller, the flow table being used for establishing a new routing channel and establishing a forwarding channel between the new anchor gateway and the old anchor gateway; and

sending, by the controller, a control message to the MME, so as to notify the MME to trigger a Packet Data Network PDN connection establishment process of an Access Point Name APN via the control message, and instructing the MME to respond to a PDN connection establishment request of the APN initiated by a User Equipment UE.

According to another aspect of the embodiments of the present disclosure, there is provided a path establishment method, including:
sending, by an MME, user location information to a controller;
receiving, by the MME, a notification message sent by the controller; and
triggering a PDN connection establishment process of an APN according to the control message, and responding to a PDN connection establishment request of an APN initiated by a UE by the MME, an IP address or an IP address prefix of the UE in a new anchor gateway being sent to the UE via the response message.

According to another aspect of the embodiments of the present disclosure, there is provided a controller, including:

a receiving module configured to receive user location information sent by a mobility management entity MME;
a sending module configured to determine a new anchor gateway and issue a flow table to the new anchor gateway and an old anchor gateway, the flow table being used for establishing a new routing channel and a forwarding channel between new anchor gateway and the old anchor gateway; and
preferably, the sending module includes a first issuing unit and a second issuing unit;
the first issuing unit being configured to issue a first flow table to the new anchor gateway, the first flow table being used for establishing a forwarding channel bearing uplink data transmission between the new anchor gateway and the old anchor gateway, and distributing a user plane address and tunnel endpoint identifier TEID information to the new anchor gateway, and establishing a data channel of the UE on the new anchor gateway; and
the second issuing unit configured to issue a second flow table to the old anchor gateway, the second flow table being used for establishing a forwarding channel bearing downlink data transmission between the new anchor gateway and the new anchor gateway; and
a notification module configured to notify the MME to trigger a packet data network PDN connection establishment process of an access point (APN) by means of the control message, and instruct the MME to directly respond to a PDN connection establishment request of an APN initiated by a user equipment (UE).

According to a further aspect of the embodiments of the present disclosure, there is provided an MME, including:
a sending module configured to send user location information to a controller;
a receiving module configured to receive a notification message sent by the controller; and
a trigger module configured to trigger a PDN connection establishment process of an APN according to the notification message, respond to a PDN connection establishment request of an APN initiated by a UE, and send an IP address or IP address prefix of the UE in a new anchor gateway to the UE.

Preferably, the trigger module includes a sending unit, an establishing unit and a response unit;
the sending unit is configured to send a Non Access Stratum (NAS) triggering message to trigger the UE to initiate the PDN connection establishment of the APN; the establishing unit is configured to establish a radio bearer corresponding to the PDN connection through a radio bearer establishment process; and the response unit is configured to respond to the PDN connection establishment request initiated by the UE, the response message carrying the IP address or IP address prefix of the UE in the new anchor gateway.

The embodiments of the present disclosure uniformly complete the establishment of the forwarding channel and the channel supporting the new services of the user through a manner of issuing the flow table, thus avoiding the problem of inherent session establishment steps in the SDN-based EPC network, so as to achieve the effects of ensuring the service continuity of the user, optimizing the data paths subsequently initiated by the user, and reducing network interaction signaling.

### BRIEF DESCRIPTION OF THE DRAWINGS

The drawings illustrated herein are intended to provide further understanding of the present disclosure, and constitutes a part of the present application. Exemplary embodiments and explanations of the present disclosure herein are only for explanation of the present disclosure, but are not intended to limit the present disclosure. In the drawings:
Fig. 1 is a system frame diagram of a software-defined core SDN EPC, according to the related arts;
Fig. 2 is an implementation principle diagram for establishing core EPC network optimize path and ensuring service continuity, according to the related arts;
Fig. 3 is an implementation flow chart for establishing core EPC network optimize path and ensuring service continuity, according to the related arts;
Fig. 4 is a flow chart of a method, according to embodiments of the present disclosure;
Fig. 5 is another flow chart of a method, according to the embodiments of the present disclosure;
Fig. 6 is a flow chart of a method, according to a first embodiment of the present disclosure;
Fig. 7 is a flow chart of a method, according to a second embodiment of the present disclosure;
Fig. 8 is a flow chart of a method, according to a third embodiment of the present disclosure;
Fig. 9 is a flow chart of a method, according to a fourth embodiment of the present disclosure;
Fig. 10 is a block diagram showing a structure of a controller corresponding to the flows of the method in Fig. 4;
Fig. 11 is a block diagram showing a structure of a sending module in Fig. 10;
Fig. 12 is a block diagram showing a structure of a mobility management entity MME corresponding to the flows of the method in Fig. 5; and
Fig. 13 is a block diagram showing a structure of a trigger module in Fig. 12.

### DETAILED DESCRIPTION

It should be illustrated that the embodiments in the present application and the features in the embodiments can be mutually combined if there is no conflict. Hereinafter, the present disclosure would be further described in details with reference to the drawings and embodiments.

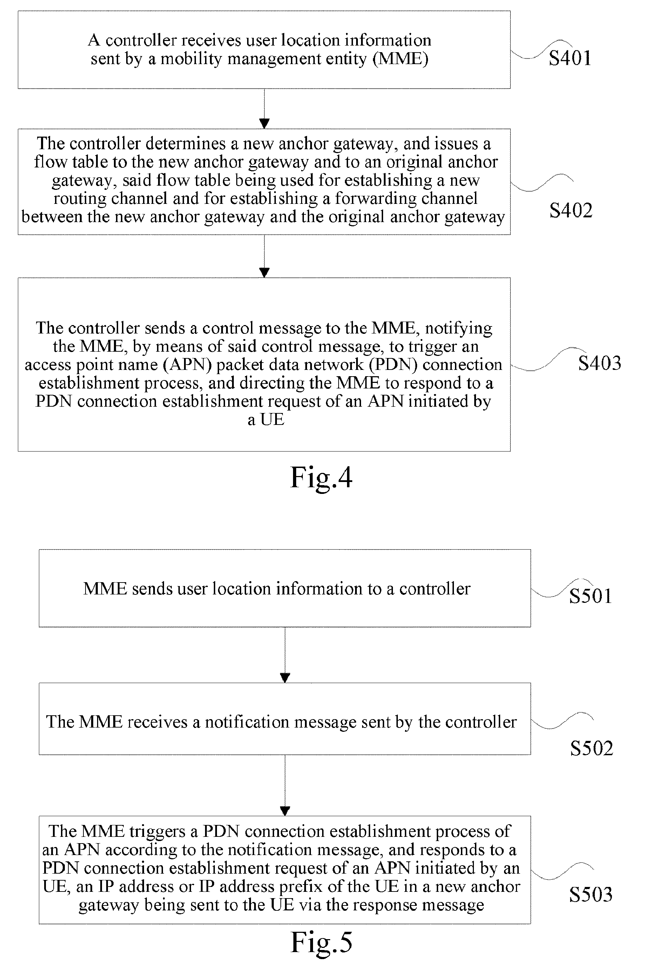

The embodiments of the present disclosure provide a method for implementing path establishment. The method relates to two aspects, and one aspect as shown in Fig. 4 includes the following steps.

In step S401, a controller receives user location information sent by a Mobility Management Entity (MME).

In step S402, the controller determines a new anchor gateway and issues a flow table to the new anchor gateway and an old anchor gateway, the flow table being used for establishing a new routing channel, and for establishing a forwarding channel between the new routing channel and the new anchor gateway.

In step S403, the controller sends a control message to the MME, and via the control message, the controller notifies the MME to trigger a Packet Data Network (PDN) connection establishment process of an Access Point Name (APN), and instructs the MME to respond to a PDN connection establishment request of an APN initiated by a user equipment (UE).

The other aspect of the method, as shown in Fig. 5, includes the following steps.

In step S501, an MME sends user location information to a controller.

In step S502, the MME receives a notification message sent by the controller.

In step S503, according to the notification message, the MME triggers a PDN connection establishment process of an APN, responds to a PDN connection establishment request of an APN initiated by a UE, and sends an IP address or an IP address prefix of the UE in a new anchor gateway via a response message to the UE.

The new anchor gateway is determined and the flow table is issued to the new anchor gateway and the old anchor gateway through the controller, and a new routing channel and a forwarding channel between the new anchor gateway and the old anchor gateway are established according to the flow table, so that the MME receives a modify bearer response of the controller and triggers the UE to initiate the process of establishing the PDN connection of the APN. After the UE initiates the request, the MME directly responds to the request, thereby avoiding the inherent session setup steps in the SDN-based EPC network, and optimizing the data paths initiated by the user subsequently.

To make the technical problem, technical solutions and implementation methods of the present disclosure more clear, the present disclosure would be further described in details with reference to the accompanying drawings and specific embodiments.

### First embodiment

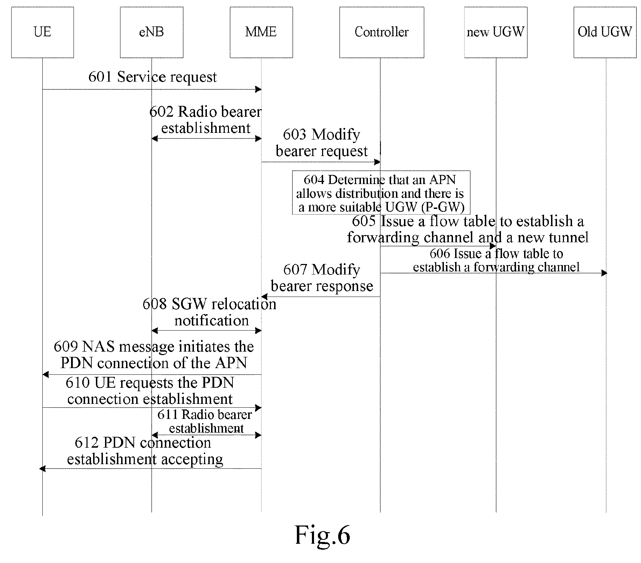

Fig. 6 is a first implementation manner of the present disclosure, particularly including the following steps.

In step S601, when a user needs to send uplink data or signaling, a UE is triggered to initiate a service request process, and then the UE sends a service request message to an MME. When forwarding the service request message, an eNB (evolved NodeB) sends an eNB ID identifying the user location and/or TAI information configured by the eNB to the MME.

In step 602, the MME establishes a corresponding radio bearer according to session information saved in the context. The MME sends an address and TEID of an old SGW to the eNB in a radio bearer establishment request message. The eNB sends a user plane address and a TEID of an eNB to the MME in a radio bearer establishment response message.

In step 603, the MME sends a modify bearer request message to a controller *controller,* the message carrying user location information, such as eNB ID, TAI and the like.

In step 604, the controller *controller* determines whether to select a new UGW to serve the user according to the user location information and APN subscription information. If the APN subscription of the user allows distribution, then a new anchor gateway may be selected.

In step 605, the controller *controller* issues a flow table to the new UGW for establishing a user data forwarding channel between the new UGW and the old UGW so as to ensure the uplink user data transmission in progress, and for assigning a user plane address and a TEID for the new UGW so as to establish a data channel for the user to access an external network on the new UGW

In step 606, the controller *controller* issues a flow table to the old UGW for establishing a user data forwarding channel between the old UGW and the new UGW, so as to ensure the downlink user data transmission in progress.

In step 607, the controller *controller* returns a modify bearer response message to the MME, in addition to the uplink user plane address and the tunnel TEID information assigned by the controller for the new UGW, the message being further added with parameters for instructing the MME to initiate the PDN connection establishment of the same APN, assigning the address or address prefix of the user on the new UGW, and indicating the MME to directly return a PDN connection establishment response message of the APN.

In step 608, the MME notifies the address and TEID of the new UGW designated by the *controller* to the eNB through an SGW relocation notification message for uplink data transmission, and the eNB returns an SGW relocation confirmation message.

In step 609, the MME triggers the UE to initiate the PDN connection establishment of a designated APN according to the instruction obtained in step 607, for updating a user plane channel on an S1-U interface and designating a new IP address/IP prefix for the user accordingly.

In step 610, the UE initiates a PDN connection establishment request of the designated APN according to an NAS triggering message of the MME.

In step 611, the MME establishes a radio bearer corresponding to the PDN connection through a radio bearer establishment process. The MME notifies the user plane address and the TEID designated by the *controller* for the UGW to the eNB via a radio bearer establishment message.

In step 612, in accordance with the instruction obtained in step 607, the MME does not need to send a session setup request to the *controller* according to the conventional EPC network, because a new PDN connection channel at the network side has been completed in step 605, and then the MME directly returns a PDN connection establishment response message to the UE, the message carrying the IP address or IP address prefix designated by the *controller* for the user. The user may use the newly designated IP address to initiate a new service subsequently.

### Second embodiment

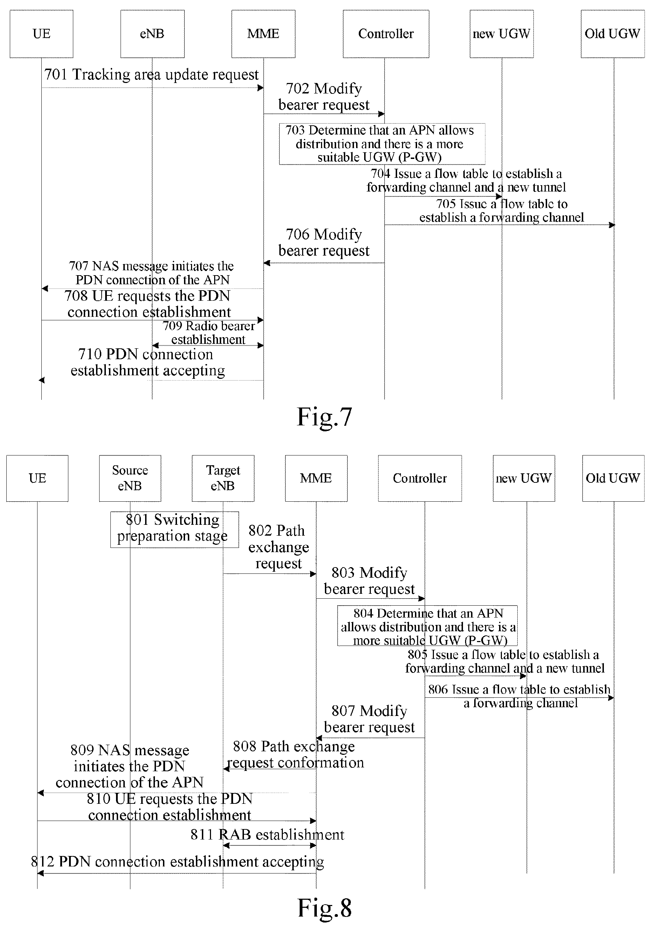

Fig. 7 is a second implementation manner of the present disclosure, particularly including the following steps.

In step 701, a tracking area update request message is initiated when a user moves to an area outside a tracking area list. When forwarding a service request message, an eNB sends an eNB ID identifying a user location and/or TAI information configured by the eNB to an MME.

In step 702, the MME sends a modify bearer request message to a controller *controller,* the message carrying user location information, such as eNB ID, TAI and the like.

In step 703, the controller *controller* determines whether to select a new UGW to serve the user according to the user location information and APN subscription information. If the APN subscription of the user allows distribution, then a new anchor gateway may be selected.

In step 704, the controller issues a flow table to the new UGW for establishing a user data forwarding channel between the new UGW and an old UGW, so as to ensure the uplink user data transmission in progress, and assigning a user plane address and a TEID for the new UGW so as to establish a data channel for the user to access an external network on the new UGW

In step 705, the controller *controller* issues a flow table to the old UGW for establishing a user data forwarding channel between the old UGW and the new UGW, so as to ensure the downlink user data transmission in progress.

In step 706, the controller *controller* returns a modify bearer response message to the MME, in addition to the uplink user plane address and the tunnel TEID information assigned by the controller *controller* for the new UGW, the message being further added with parameters for instructing the MME to initiate the PDN connection establishment of the same APN, assigning the address or address prefix of the user on the new UGW, and indicating the MME to directly return a PDN connection establishment response message of the APN.

In step 707, the MME triggers a UE to initiate the connection establishment of a designated APN according to the instruction obtained in step 706, for updating a user plane channel on an S1-U interface and designating a new IP address/IP prefix for the user accordingly.

In step 708, the UE initiates a PDN connection establishment request of the designated APN according to an NAS triggering message of the MME.

In step 709, the MME establishes a radio bearer corresponding to the network PDN connection through a radio bearer establishment process. The MME notifies the user plane address and the TEID designated by the controller *controller* for the UGW to the eNB in a radio bearer establishment message.

In step 710, in accordance with the instruction obtained in step 706, the MME does not need to send a session setup request to the *controller* according to the conventional EPC network, because a new PDN connection channel at the network side is already completed in step 704, and then the MME directly returns a PDN connection establishment accepting message to the UE, the message carrying the IP address or IP address prefix designated by the *controller* for the user. The user may use the newly designated IP address to initiate a new service subsequently.

### Third embodiment

Fig. 8 is a third implementation manner of the present disclosure, particularly including the following steps.

In step 801, when it is found that a user has moved to an edge of a service area through a wireless signal detection, then a source eNB starts a target eNB selection process to select a target eNB for the user, and then initiates a switching message to the target eNB, and instructs the target eNB to reserve wireless resources, wherein this process is called as a switching preparation step.

In step 802, after reserving the wireless resources, the target eNB sends a path exchange request message to an MME, indicating that the user would subsequently move to the target eNB and requesting a core network to update data links.

In step 803, the MME sends a modify bearer request message to a controller *controller*, the message carrying user location information, such as eNB ID, TAI and the like.

In step 804, the controller *controller* determines whether to select a new UGW to serve the user according to the user location information and APN subscription information. If the APN subscription of the user allows distribution, then a new anchor gateway may be selected.

In step 805, the controller issues a flow table to the new UGW for establishing a user data forwarding channel between the new UGW and an old UGW, so as to ensure the uplink user data transmission in progress, and assigning a user plane address and a TEID for the new UGW so as to establish a data channel for the user to access an external network on the new UGW.

In step 806, the controller *controller* issues a flow table to the old UGW for establishing a user data forwarding channel between the old UGW and the new UGW, so as to ensure the downlink user data transmission in progress.

In step 807, the controller *controller* returns a modify bearer response message to the MME, in addition to the uplink user plane address and the tunnel TEID information assigned by the controller *controller* for the new UGW, the message being further added with parameters for instructing the MME to initiate the PDN connection establishment of the same APN, assigning the address or address prefix of the user on the new UGW, and indicating the MME to directly return a PDN connection establishment response message of the APN.

In step 808, the MME returns a path exchange request confirmation message to the target eNB, indicating that the data path of the core network is completely updated.

In step 809, the MME triggers a UE to initiate the PDN connection establishment of a designated APN according to the instruction obtained in step 807, and hereby update a user plane channel on an S1-U interface and designate a new IP address/IP prefix for the user.

In step 810, the UE initiates a PDN connection establishment request of the designated APN according to an NAS triggering message of the MME.

In step 811, the MME establishes a radio bearer corresponding to the network PDN connection through a radio bearer establishment process. The MME notifies the user plane address and the TEID designated by the *controller* for the UGW to the eNB in a radio bearer establishment message.

In step 812, in accordance with the instruction obtained in step 807, the MME does not need to send a session setup to the *controller* according to the conventional EPC network, because a new PDN connection channel at the network side has been already created in step 805, and the MME directly returns a PDN connection establishment accepting message to the UE, the message carrying the IP address or IP address prefix designated by the *controller* for the user. The user may use the newly designated IP address to initiate a new service subsequently.

### Fourth embodiment

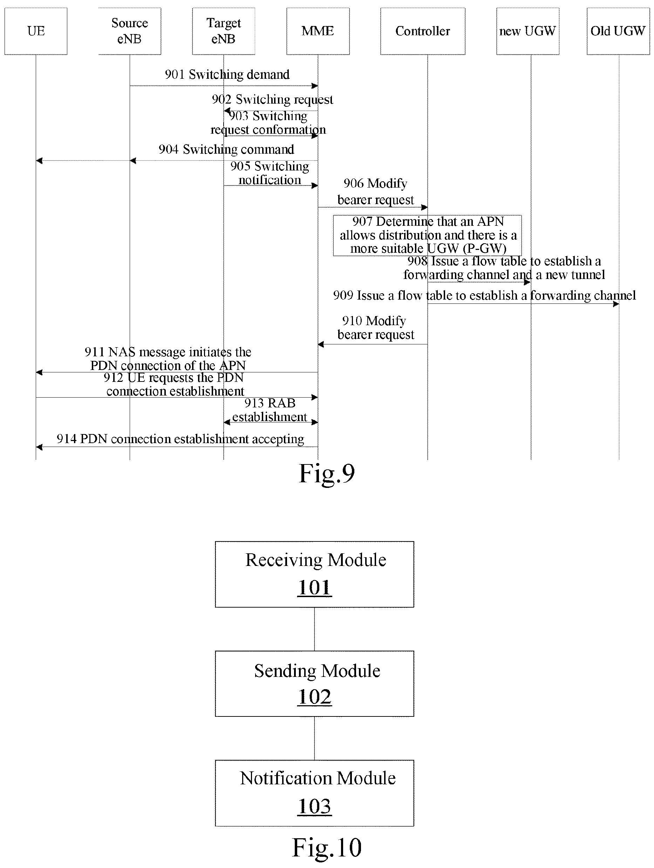

Fig. 9 is a fourth implementation manner of the present disclosure, particularly including the following steps.

In step 901, when it is found that a user has moved to an edge of a service area through a wireless signal detection, then a source eNB starts a target eNB selection process, and after selecting a target eNB for the user, if there is no direct connection between the control plane and the target eNB, then a S1 switching process is enabled, and the source eNB sends a switching requirement message to an MME attached by the user, the message carrying identifier information of the target eNB.

In step 902, the MME addresses the target eNB according to the identifier information of the target eNB, and sends a switching request message to the target eNB for requesting the target eNB to reserve wireless resources.

In step 903, after reserving the wireless resources required by the user data transmission, the target eNB returns a switching request confirmation message to the MME.

In step 904, the MME sends a switching command message to the source eNB, so as to trigger a wireless switching process from a UE to the target eNB.

In step 905, when the UE is synchronized to the target eNB, the target eNB sends a switching notification message to the MME, showing that the user has accessed from the target eNB.

In step 906, the MME sends a modify bearer request message to a controller *controller,* the message carrying user location information, such as eNB ID, TAI and the like.

In step 907, the controller *controller* determines whether to select a new UGW to serve the user according to the user location information and APN subscription information. If the APN subscription of the user allows distribution, then a new anchor gateway may be selected.

In step 908, the controller issues a flow table to the new UGW for establishing a user data forwarding channel between the new UGW and an old UGW so as to ensure the uplink user data transmission in progress, and assigning a user plane address and a TEID for the new UGW so as to establish a data channel for the user to access an external network on the new UGW.

In step 909, the controller *controller* issues a flow table to the old UGW for establishing a user data forwarding channel between the old UGW and the new UGW, so as to ensure the downlink user data transmission in progress.

In step 910, the controller *controller* returns a modify bearer response message to the MME, in addition to the uplink user plane address and the tunnel TEID information assigned by the controller *controller* for the new UGW, the message being further added with parameters for instructing the MME to initiate the PDN connection establishment of the same APN, assigning the address or address prefix of the user on the new UGW, and indicating the MME to directly return a PDN connection establishment response message of the APN.

In step 911, the MME triggers the UE to initiate the connection establishment of a designated APN according to the instruction obtained in step 910, and hereby update a user plane channel on an S1-U interface and designate a new IP address/IP prefix for the user.

In step 912, the UE initiates a PDN connection establishment request of the designated APN according to an NAS triggering message of the MME.

In step 913, the MME establishes a radio bearer corresponding to the network PDN connection through a radio bearer establishment process. The MME notifies the user plane address and the TEID designated by the controller *controller* for the UGW to the eNB in a radio bearer establishment message.

In step 914, in accordance with the instruction obtained in step 910, the MME does not need to send a session setup to the *controller* according to the conventional EPC network, because a new PDN connection channel at the network side has been already created in step 908, and the MME directly replies a PDN connection establishment accepting message to the UE, the message carrying the IP address or IP address prefix designated by the *controller* for the user. The user may use the newly designated IP address to initiate a new service subsequently.

It should be illustrated that the steps shown in the flowchart of the drawings may be executed in a computer system such as a group of computer-executable instructions; moreover, although a logic sequence is shown in the flowchart, in some cases, the shown or described steps may be executed in a sequence different from the sequence illustrated herein.

According to the embodiments of the present disclosure, there is also provided a controller, wherein the controller may be used to implement the foregoing steps S401-S403 and the foregoing method embodiments. Fig. 10 is a block diagram showing a structure of a controller, according to the embodiments of the present disclosure. As shown in Fig. 10, the controller includes a receiving module 101, a sending module 102 and a notification module 103.

The receiving module 101 is configured to receive user location information sent by a Mobility Management Entity (MME).

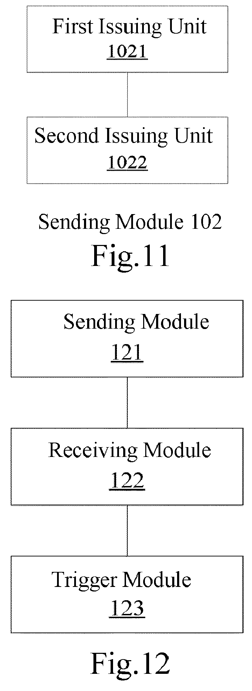

The sending module 102 is configured to determine a new anchor gateway, and issue a flow table to the new anchor gateway and an old anchor gateway, the flow table being used for establishing a new routing channel, and a forwarding channel between the new routing channel and the new anchor gateway. As shown in Fig. 11, the sending module 102 includes a first issuing unit 1021 and a second issuing unit 1022. The first issuing unit 1021 is configured to issue a first flow table to the new anchor gateway, the first flow table being used for establishing a forwarding channel bearing uplink data transmission between the new routing channel and the new anchor gateway, and assigning a user plane address and a tunnel endpoint identifier TEID information to the new anchor gateway so as to establish a new data channel for the UE on the new anchor gateway. The second issuing unit 1022 is configured to issue a second flow table to the old anchor gateway, the second flow table being used for establishing a forwarding channel bearing downlink data transmission between the new routing channel and the new anchor gateway.

The notification module 103 is configured to notify the MME to trigger a packet data network (PDN) connection establishment process of an access point (APN), and instruct the MME to directly respond to a PDN connection establishment request of an APN initiated by a user equipment UE by means of the control message.

The above-mentioned receiving module, sending module and notification module may all be implemented by a combination of such hardware as a modulator-demodulator, a CPU, a memory, or the like.

According to the embodiments of the present disclosure, there is also provided an MME, wherein the MME may be used to implement the foregoing steps S501-S503 and the foregoing method embodiments. Fig. 12 is a block diagram showing a structure of an MME, according to the embodiments of the present disclosure. As shown in Fig. 12, the MME includes a sending module 121, a receiving module 122 and a trigger module 123.

The sending module 121 is configured to send user location information to a controller.

The receiving module 122 is configured to receive a notification message sent by the controller.

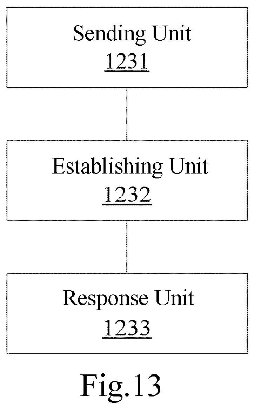

The trigger module 123 is configured to trigger a PDN connection establishment process of an APN according to the notification message, directly respond to a PDN connection establishment request of an APN initiated by a UE, and send an IP address or IP address prefix of the UE in a new anchor gateway to the UE via a response message. As shown in Fig. 13, the trigger module 123 includes a sending unit 1231, an establishing unit 1232 and a response unit 1233. The sending unit 1231 is configured to send an NAS triggering message to trigger the UE to initiate the PDN connection establishment of the APN. The establishing unit 1232 is configured to establish a radio bearer corresponding to the PDN connection through a radio bearer establishment process. The response unit 1233 is configured to directly respond to the PDN connection establishment request initiated by the UE, the response message carrying the IP address or IP address prefix of the UE in the new anchor gateway.

The above receiving module, sending module and notification module may all be implemented by a combination of such hardware as a modulator-demodulator, a CPU, a memory, or the like.

It should be illustrated that the controller and the MME described in the device embodiments are corresponding to the above method embodiments, and the specific implementation processes thereof have been explained in details in the method embodiments, and would not be elaborated herein.

In conclusion, according to the foregoing embodiments of the present disclosure, it can be seen through the foregoing embodiments that the embodiments of the present disclosure can ensure the continuity of the user service and relatively optimize the data paths initiated by the user subsequently, and at the same time, compared with the EPC network solution in the background, the embodiments of the present disclosure can reduce the operation steps. In the embodiments of the present disclosure, the establishment of the forwarding channel and the channel for supporting the new services of the user is uniformly completed through a manner of issuing the flow table, thus avoiding the inherent session setup steps in the EPC network. The advantages of reducing the network signaling interaction can quickly complete the flows and reduce the time delay, and also can reduce the wasting of the network resources caused by signaling processing.

Obviously, those skilled in the art shall understand that the above-mentioned modules and steps of the present disclosure may be realized by using a general purpose calculating device, may be integrated in one calculating device or distributed on a network which consists of a plurality of calculating devices. Alternatively, the modules and the steps of the present disclosure can be realized by using the executable program code of the calculating device. Consequently, they can be stored in the storing device and executed by the calculating device, or they are made into integrated circuit modules respectively, or a plurality of modules or steps thereof are made into one integrated circuit module. In this way, the present disclosure is not restricted to any particular combination of hardware and software.

The above descriptions are merely preferred embodiments of the present disclosure, but are not intended to limit the present disclosure. For those skilled in the art, the present disclosure may have various alternations and modifications. Any modification, equivalent replacement, improvement and the like, made within the spirit and principle of the present disclosure, shall all fall within the protection scope of the present disclosure.

## Claims

1. A path establishment method, **characterized in that**, the method comprises:
receiving, by a controller, user location information sent by a Mobility Management Entity MME;
determining a new anchor gateway, and issuing a flow table to the new anchor gateway and an old anchor gateway by the controller, the flow table being used for establishing a new routing channel and establishing a forwarding channel between the new anchor gateway and the old anchor gateway; and
sending, by the controller, a control message to the MME, so as to notify the MME to trigger a Packet Data Network PDN connection establishment process of an Access Point Name APN via the control message, and instructing the MME to respond to a PDN connection establishment request of the APN initiated by a User Equipment UE.

2. The method according to claim 1, wherein the receiving, by the controller, the user location information sent by the MME comprises:
receiving, by the controller, a modify bearer request message sent by the MME, the modify bearer request message carrying the user location information.

3. The method according to claim 1, wherein the determining, by the controller, the new anchor gateway comprises:
determining, by the controller, the new anchor gateway according to the user location information when APN subscription information allows distribution.

4. The method according to claim 1, wherein the issuing, by the controller, the flow table to the new anchor gateway and the old anchor gateway comprises:
issuing, by the controller, a first flow table to the new anchor gateway, the first flow table being used for establishing a forwarding channel bearing uplink data transmission between the new anchor gateway and the old anchor gateway, assigning a user plane address and tunnel endpoint identifier TEID information for the new anchor gateway, and establishing a data channel of the UE on the new anchor gateway; and
issuing, by the controller, a second flow table to the old anchor gateway, the second flow table being used for establishing a forwarding channel bearing downlink data transmission between the new anchor gateway and the old anchor gateway.

5. The method according to any one of claims 1 to 4, wherein the user location information comprises: an evolved NodeB eNB identifier ID identifying the user location and/or Tracking Area Information TAI configured by the eNB.

6. A path establishment method, **characterized in that**, the method comprises:
sending, by an MME, user location information to a controller;
receiving, by the MME, a control message sent by the controller; and
triggering a PDN connection establishment process of an APN according to the control message, and responding to a PDN connection establishment request of an APN initiated by a UE by the MME, an IP address or an IP address prefix of the UE in a new anchor gateway being sent to the UE via the response message.

7. The method according to claim 6, wherein the sending, by the MME, the user location information to the controller comprises:
sending, by the MME, a modify bearer request message to the controller, the modify bearer request message carrying the user location information.

8. The method according to claim 6, wherein the triggering the PDN connection establishment process of the APN according to the control message, and responding to the PDN connection establishment request of the APN initiated by the UE by the MME, the IP address or the IP address prefix of the UE in the new anchor gateway being sent to the UE via the response message comprises:
sending, by the MME, a Non Access Stratum NAS triggering message to trigger the UE to initiate the PDN connection establishment of the APN;
establishing, by the MME, a radio bearer corresponding to the PDN connection through a radio bearer establishment process; and
responding to, by the MME, the PDN connection establishment request initiated by the UE, the response message carrying the IP address or IP address prefix of the UE in the new anchor gateway.

9. The method according to any one of claims 6 to 8, wherein the user location information comprises: an evolved NodeB eNB identifier ID identifying the user location and/or Tracking Area information TAI configured by the eNB.

10. A controller, **characterized in that**, the controller comprises: a receiving module, a sending module and a notification module, wherein:
the receiving module is configured to receive user location information sent by a Mobility Management Entity MME;
the sending module is configured to determine a new anchor gateway and send a flow table to the new anchor gateway and an old anchor gateway, the flow table being used for establishing a new routing channel, and a forwarding channel between the new anchor gateway and the old anchor gateway; and
the notification module is configured to send a control message to the MME, notify the MME to trigger a Packet Data Network PDN connection establishment process of an Access Point Name APN by means of the control message, and instruct the MME to respond to a PDN connection establishment request of an APN initiated by a User Equipment UE.

11. The controller according to claim 10, wherein:
the receiving module is configured to receive a modify bearer request message sent by the MME, the modify bearer request message carrying the user location information.

12. The controller according to claim 10, wherein:
the sending module is configured to determine the new anchor gateway according to the user location information when APN subscription information allows distribution.

13. The controller according to claim 10, wherein the sending module comprises:
a first issuing unit configured to issue a first flow table to the new anchor gateway, the first flow table being used for establishing a forwarding channel bearing uplink data transmission between the new anchor gateway and the old anchor gateway, assigning a user plane address and Tunnel Endpoint Identifier TEID information to the new anchor gateway, and establishing a data channel of the UE on the new anchor gateway; and
a second issuing unit configured to issue a second flow table to the old anchor gateway, the second flow table being used for establishing a forwarding channel bearing downlink data transmission between the new anchor gateway and the old anchor gateway.

14. The controller according to any one of claims 10 to 13, wherein the user location information comprises: an evolved NodeB eNB identifier ID identifying the user location and/or Tracking Area Information TAI configured by the eNB.

15. An MME, **characterized in that**, the MME comprises: a sending module, a receiving module and a trigger module, wherein:
the sending module is configured to send user location information to a controller;
the receiving module is configured to receive a notification message sent by the controller; and
the trigger module is configured to trigger a PDN connection establishment process of an APN according to the notification message, and respond to a PDN connection establishment request of an APN initiated by a User Equipment UE, an IP address or an IP address prefix of the UE in a new anchor gateway being sent to the UE in a response message.

16. The MME according to claim 15, wherein the sending module is configured to send a modify bearer request message to the controller, the modify bearer request message carrying the user location information.

17. The MME according to claim 15, wherein the trigger module comprises:
a sending unit configured to send a Non Access Stratum NAS triggering message to trigger the UE to initiate the PDN connection establishment of the APN;
an establishing unit configured to establish a radio bearer corresponding to the PDN connection through a radio bearer establishment process; and
a response unit configured to respond to the PDN connection establishment request initiated by the UE, the response message carrying the IP address or IP address prefix of the UE in the new anchor gateway.

18. The MME according to any one of claims 15 to 17, wherein the user location information comprises: an evolved NodeB eNB identifier ID identifying the user location and/or Tracking Area Information TAI configured by the eNB.
